# EUROPÄISCHE PATENTSCHRIFT

(11) **EP 3 064 262 B1**
(45) Veröffentlichungstag und Bekanntmachung des Hinweises auf die Patenterteilung: **18.10.2017**
(21) Anmeldenummer: 16157576.6
(22) Anmeldetag: 26.02.2016
(51) Int. Cl.: B01D 39/16

(54) **FILTERMEDIUM, VERFAHREN ZUR HERSTELLUNG EINES FILTERMEDIUMS UND FILTERELEMENT MIT EINEM FILTERMEDIUM**
FILTER MEDIUM, METHOD FOR PRODUCING A FILTER MEDIUM AND FILTER ELEMENT WITH A FILTER MEDIUM
MILIEU FILTRANT, PROCEDE DE FABRICATION D'UN MILIEU FILTRANT ET ELEMENT DE FILTRE COMPRENANT UN MILIEU FILTRANT

(30) Priorität: 03.03.2015 DE 102015002672
(43) Veröffentlichungstag der Anmeldung: 07.09.2016
(73) Patentinhaber: MANN + HUMMEL GMBH, 71636 Ludwigsburg (DE)
(72) Erfinder: GREIN, Thomas, 76344 Eggenstein-Leopoldshafen (DE); STINZENDÖRFER, Joachim, 67346 Speyer (DE); KREINER, Anton, 94419 Reisbach (DE)
(74) Vertreter: Seyboth, Matthias

(56) Entgegenhaltungen:
- EP-A2- 2 589 422
- US-A1- 2014 020 350

## Beschreibung

### Technisches Gebiet

Die Erfindung betrifft ein Filtermedium zur Filterung von Fluiden, insbesondere zur Filterung von Flüssigkeiten, sowie ein Filterelement mit einem solchen Filtermedium und ein Verfahren zur Herstellung eines solchen Filtermediums, insbesondere für die Verwendung als Erodierfilter.

### Stand der Technik

Es ist bekannt Nanofasern auf einer deutlich gröberen Stützlage anzuordnen. Das Aufbringen feiner Fasern auf eine Stützlage dient der Stabilisierung der Feinfaserschicht im Filtrationsbetrieb aber auch bei der Verarbeitung, insbesondere beim Falten der Nanofasern,

Ein geschichteter Aufbau kommt auch bei der Abstimmung von Medien für die Erfordernisse der Tiefenfiltration zum Einsatz. Bei diesen Medien folgen in der Regel in Strömungsrichtung feinere Fasern auf gröbere Fasern. Dadurch soll eine fraktionierte Abscheidung der Partikeln in der Tiefe des Mediums erreicht werden. Das Ziel ist hierbei eine möglichst gleichmäßige Beladung des Filtermediums und die somit optimale Ausnutzung des für die Partikeleinlagerung zur Verfügung stehenden Porenvolumens im Filtermedium. Die EP 2 222 385 A2 offenbart beispielsweise Nanofaserlage mit einem Gradienten bezüglich des Faserdurchmessers. Dieser nimmt allerdings in Strömungsrichtung ab. Ebenso zeigt US 2014/020350 A1 eine Nanofaserlage mit einem in Strömungsrichtung abnehmenden Faserdurchmesser.

Darüber hinaus sind Erodierfilterelemente mit Filtermedien aus Faservlies bereits aus der EP 1 764 144 A1 bekannt, auf welche bezüglich des Aufbaus eines Erodierfilters im Rahmen der vorliegenden Erfindung Bezug genommen wird. Der Aufbau des eingesetzten Filtermediums weist eine Nanofaserlage auf, die auf eine Cellulose-Stützschicht aufgebracht ist.

### Offenbarung der Erfindung

Die Aufgabe der vorliegenden Erfindung ist es, ausgehend von der EP 1 764 144 A1, ein faltbares Filtermedium mit zumindest einer Nanofaserlage zu schaffen, weiches eine bessere Widerstandsfähigkeit aufweist.

Die vorgenannte Aufgabe wird durch ein erfindungsgemäßes Filtermedium mit den Merkmalen des Anspruchs 1 gelöst.

Ein erfindungsgemäßes Filtermedium, umfasst eine erste Medienlage und eine zweite Medienlage, welche zweite Medienlage in einer bestimmungsgemäßen Strömungsrichtung des Filtermediums hinter der ersten Medienlage angeordnet ist, wobei die erste Medienlage als eine Nanofaserlage mit Nanofasern ausgebildet ist und wobei die zweite Medienlage als eine Stützschicht mit einem mittleren Flächengewicht von mehr als 60 g/m² ausgebildet ist.

Die erste Medienlage des erfindungsgemäßen Filtermediums weist anströmseitig einen ersten Bereich und abströmseitig zur zweiten Mediumslage hin einen zweiten Bereich auf. Die Nanofasern des ersten Bereichs weisen einen kleineren mittleren Faserdurchmesser als die Nanofasern des zweiten Bereichs auf.

Das erfindungsgemäße Filtermedium weist einerseits eine hervorragende Filterwirkung bei vergleichsweise geringem Druckverlust auf und ist trotz der Verwendung von sehr feinen Nanofasern widerstandsfähig gegenüber mechanischem Einfluss und chemischaggressiven Substanzen.

Vorteilhafte Ausgestaltungen der Erfindung sind Gegenstand der Unteransprüche.

Für eine besonders gute Filterwirkung bietet es sich an im ersten Bereich eine besonders hohe Anzahl von Nanofasern mit kleineren Faserdurchmessern zu nutzen. Daher ist es von Vorteil, wenn mehr als 75% der Nanofasern des ersten Bereichs einen kleineren Faserdurchmesser aufweisen als die Nanofasern des zweiten Bereichs.

Es sind Filtermedien bekannt, beispielsweise aus der EP 2 398 633 A1, welche mehrlagig aufgebaut sind und welche zwischen den Lagen lose angeordnete Nanofasern aufweisen. Diese Nanofasern können sich allerdings nach längerem Gebrauch zunehmend vermischen, so dass die Gradientenstruktur der Nanofaserlage nach und nach verloren geht. Daher ist es von Vorteil, wenn die Nanofasern des ersten Bereichs auf die Nanofasern des zweiten Bereichs, insbesondere mittels eines Elektrospinnverfahrens, aufeinander abgelegt werden. Vorwiegend durch Formenschluss und/oder Oberflächenwechselwirkungen haften die Nanofasern des ersten Bereichs auf den Nanofasern des zweiten Bereichs. Vorzugsweise kann auch eine zusätzliche Anhaftung der Nanofasern des ersten Bereichs als auch des zweiten Bereichs durch einen Haftvermittler der sich auf der zweiten Mediumslage befindet, erfolgen. Dadurch entsteht eine vorteilhafte zusätzliche Verstärkung der Haftung.

Der erste Bereich kann aus Nanofasern mit einem mittleren Faserdurchmesser von 50 bis 400 nm, vorzugsweise 50 bis 250 nm, weiter vorzugsweise 50 bis 150 nm, bestehen. Diese sehr feinen Nanofasern ermöglichen ein optimales Filterverhalten. Die Nanofasern des ersten Bereichs sind bevorzugt im Elektrospinning-Verfahren hergestellt.

Der zweite Bereich kann aus Nanofasern mit einem mittleren Faserdurchmesser von 150 bis 1000 nm, vorzugsweise 150 bis 500 nm, besonders bevorzugt 150 bis 299 nm, bestehen. Diese eher gröberen Nanofasern stützen die Nanofasern des ersten Bereichs, erhöhen die Widerstandsfähigkeit der Fasern des ersten Bereichs und tragen zur Filterung des zu filternden Fluids bei. Nanofasern des zweiten Bereichs sind bevorzugt im Elektrospinning-Verfahren hergestellt. Im Vergleich zu Faserverbünden aus anderen Herstellverfahren, beispielsweise im Vergleich zu Spinnvliesen, kann das Elektrospinningverfahren dahingehend Vorteile haben, dass insbesondere kleinere Faserdurchmesser, die dünnere Ausführung von wirksamen Schichten und geringere Streuungen innerhalb der Faserlage hinsichtlich Faserdurchmeser oder Porengrößen ermöglicht werden.

Besonders bevorzugt sind die Nanofasern des ersten und/oder des zweiten Bereichs einkomponentige Nanofasern. Diese sind leichter und mit gleichmäßigeren Eigenschaften zu einem Filtermedium verarbeitbar wie beispielswiese Bikomponenten- und/oder Splitfasern.

Besonders bevorzugt sind sämtliche Nanofasern der ersten Medienlage im Elektrospinning-Verfahren hergestellt.

Besonders bevorzugt sind die Nanofasern des ersten und/oder des zweiten Bereichs spinnennetzartig übereinander angeordnet. Weiter bevorzugt weisen die Nanofasern des ersten und/oder zweiten Bereichs einen im Wesentlichen runden Querschnitt auf. Dies ermöglicht insbesondere etwas gleichmäßigere Eigenschaften, da eine Lageänderung einer Einzelfaser, insbesondere eine Rotation, nicht zu einer signifikanten Änderung des Querschnitts der Einzelfaser quer zur Strömungsrichtung führt.

Die Nanofasern der ersten Materiallage können bevorzugt zu mehr als 75% Polyamid-Nanofasern, insbesondere 100% aus Polyamid, bestehen. Nanofasern aus Polyamid sind zeiteffizient und kostengünstig herstellbar.

Die erste Materiallage weist bevorzugt ein Flächengewicht von kleiner 20 g/m², bevorzugt kleiner 10 g/m², besonders bevorzugt kleiner 1 g/m² auf. Damit werden beispielsweise eine hohe Abscheideleistung bei gleichzeitig möglichst geringem Druckverlust, ausreichender Gesamtstabilität und geringem Materialaufwand erreicht.

Weitere bevorzugte Nanofasermaterialien gemäß der vorliegenden Erfindung bzw. Materialien welche gemäß der vorliegenden Erfindung zu Nanofasern verspinnbar sind, sind Polyolefine, Polyacetale, Polyester, Zelluloseester, Zelluloseether, Polyalkylensulfide, Polyarylenoxide, Polysulfone, modifizierte Polysulfone und/oder Mischungen dieser Polymere. Besonders bevorzugte Materialien der vorgenannten Polymerklassen, welche für die vorgenannten Nanofasern in Frage kommen sind insbesondere Polyethylen, Polypropylen, Polyvinylchlorid, Polymethylmethacrylat (und weitere Acrylharze), Polystyren und /oder Copolymere der vorgenannten Polymere umfassend Block-Copolymere des Typs ABBA, sowie Polyvinylidenfluorid, Polyvinylidenchlorid, Polyvinylalkohol in verschiedenen Hydrolysegraden (87% bis 99,5%) in vernetzter oder unvernetzter Form.

Der mittlere Faserdurchmesser der Nanofasern nimmt vom ersten zum zweiten Bereich zumindest um den Faktor 1,5 bis 5,0; vorzugsweise jedoch zumindest um den Faktor 1,5 bis 3,0 zu. Dies bezieht sich auf die Gesamtzahl an Fasern im ersten und im zweiten Bereich. Selbstverständlich können einzelne Fasern im ersten Bereich auch dünner sein als im zweiten Bereich. Im Durchschnitt über alle sich im ersten Bereich befindlichen Fasern nimmt der Faserdurchmesser jedoch um den vorgenannten Faktor gegenüber allen im zweiten Bereich befindlichen Fasern zu.

Die zweite Materiallage, also die Stützlage, kann vorteilhaft als Meltblown- oder Spunbondlage, bzw. als Schmelzblas- oder Spinnvlieslage, ausgebildet ist. Diese Faservliese haben sich zur Filterung von Fluiden, insbesondere von Flüssigkeiten bewährt. Dabei kann die zweite Materiallage zumindest 50%, insbesondere zumindest 75% der Fasern der zweiten Materiallage aus einem Polyester und/oder aus einem Polypropylen bestehen. Alternativ kann die zweite Materiallage als zellulosebasierte Lage ausgebildet sein.

Die zweite Materiallage besteht idealerweise aus besonders widerstandsfähigen Fasern. Die Fasern dieser Materiallage können daher vorteilhaft einen mittleren Faserdurchmesser von mehr 3 µm aufweisen.

Ein erfindungsgemäßes Filterelement weist ein erfindungsgemäßes Filtermedium auf, wobei das Filtermedium des Filterelements gefaltet ist.

Dies kann besonders bevorzugt zu einem Rundkörper ausgebildet sein und wobei das Filterelement zwei Endscheiben aufweist, zwischen welchen der aus dem Filtermedium gebildete Rundkörper angeordnet, insbesondere eingefasst, ist. Selbstverständlich kann das Filterelement auch weitere Bestandteile, z.B. einen zylindrischen Stützkörper als Kunststoff-Formkörper oder aus Metall aufweisen.

Besonders bevorzugt kann der Rundkörper sternförmig ausgebildet sein. Alternativ kann der Rundkörper in der Form gemäß der DE 10 2009 057 438 B3 ausgebildet sein, auf deren Offenbarung bezüglich der Form und Ausgestaltung eines Filterelements im Rahmen der vorliegenden Erfindung vollumfänglich Bezug genommen wird.

Das Filterelement kann insbesondere als Filterkartusche ausgebildet sein und zur Filterung von Flüssigkeiten, beispielsweise Wasser, Öl oder Kraftstoff, verwandt werden.

Eine besondere Verwendung des Filterelements ist die Verwendung als Erodierfilter in einer Erodiermaschine.

Im Rahmen der Verwendung als Erodierfilter kann der mittlere Faserdurchmesser der jeweiligen Bereiche der ersten Materiallage auf das Partikelspektrum des zu filternden Mediums abgestimmt werden. Dadurch wird ein optimaler Filterkuchen gebildet, welcher das Verblocken der unterliegenden Fasern verhindert. Dabei muss das Filterelement bei erfindungsgemäßer Verwendung als Erodierfilter auch einer höheren mechanischen Belastung standhalten als bei Luftfiltern.

Im Übrigen kann die erste Medienlage aus mehr als zwei Bereiche mit Nanofasern bestehen. Dabei nimmt vorzugsweise der mittlere Faserdurchmesser der Nanofasern der Bereiche von der Anströmseite zur zweiten Materiallage hin von Bereich zu Bereich zu.

Die Erfindung betrifft ferner ein Verfahren zur Herstellung eines Filtermediums, insbesondere eines Filtermediums zur Flüssigkeitsfiltration, das Medium umfassend eine erste Medienlage und eine zweite Medienlage, welche zweite Medienlage in einer bestimmungsgemäßen Strömungsrichtung des Filtermediums insbesondere hinter der ersten Medienlage anordenbar ist, wobei die erste Medienlage als eine Nanofaserlage mit Nanofasern ausgebildet ist und wobei die zweite Medienlage als eine Stützschicht mit einem mittleren Flächengewicht von mehr als 60 g/m² ausgebildet ist, wobei die Stützschicht bereitgestellt wird und die Nanofaserlage mit mindestens einem ersten Bereich und einem zweiten Bereich auf die Stützschicht aufgebracht wird, wobei der zweite Bereich zur zweiten Mediumslage hin orientiert ist und die Nanofasern des ersten Bereichs einen kleineren mittleren Faserdurchmesser als die Nanofasern des zweiten Bereichs aufweisen. Dabei wird der erste und/oder der zweite Bereich der Nanofasern bevorzugt im Elektrospinningverfahren hergestellt.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine schematische Darstellung eines Filtermediums mit zwei Materiallagen nach einem Ausführungsbeispiel der Erfindung; und
- Fig. 2a, 2b: schematische Darstellung einer bevorzugten Ausgestaltung eines Filterelements als Erodierfilter.

### Ausführungsformen der Erfindung

Die Figuren zeigen lediglich Beispiele und sind nicht beschränkend zu verstehen.

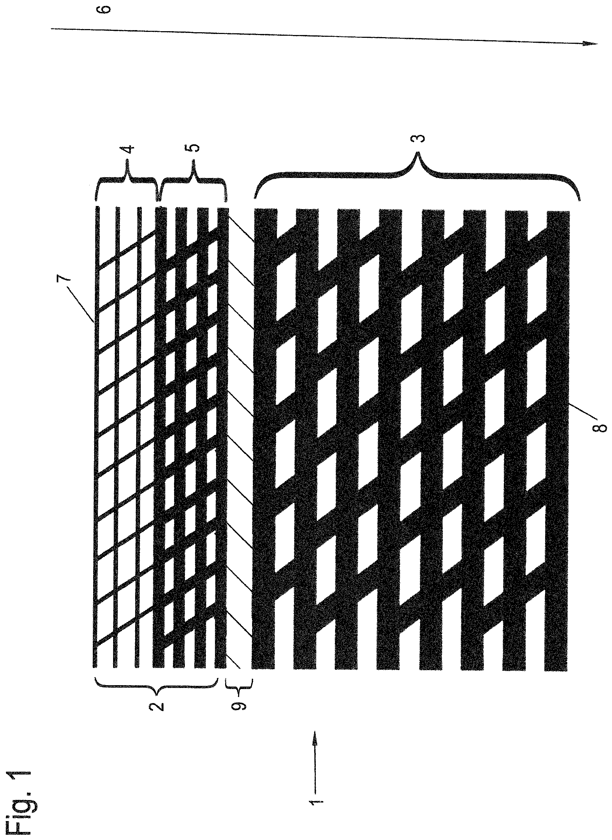

In Figur 1 ist ein Ausführungsbeispiel eines erfindungsgemäßen Filtermediums 1 dargestellt. Dieses Filtermedium weist in der dargestellten Figur zwei Materiallagen 2 und 3 auf, wobei sich die erste der zwei Materiallagen 2 in einen oberen und einen unteren Bereich 4, 5 unterteilt. Das Filtermedium kann zur Filterung eines Fluids eingesetzt werden. Eine bevorzugte Applikation ist die Verwendung als Partikelfilter zur Reinigung von Flüssigkeiten.

Der Begriff "Filtermedium" bezieht sich auf eine Struktur zur Filterung eines Fluids. Dabei wird ein Retentat auf oder in dem Filtermedium gebildet und ein Filtrat, das gereinigte Fluid. Besonders bevorzugt werden Partikel als Retentat aus dem Fluid durch das Filtermedium herausgefiltert und damit aus dem Fluid entfernt. Je nach Ausbildung des Filtermediums können Partikel und andere Substanzen vollständig oder nur teilweise aus dem zu filternden Fluid entfernt werden.

Das Filtermedium kann als Teil eines Filterelements vorgesehen sein. Das Filterelement kann z.B. ein austauschbares Teil in einer Maschine oder einer Anlage sein. Ein solches austauschbares Teil kann z.B. eine Filterkartusche sein. Sofern sich ein Filtermedium mit Retentat zusetzt, kann die Filterkartusche ersetzt werden, ohne dass die gesamte Maschine von einem Austausch betroffen ist.

Die zwei Materiallagen 2 und 3 des Filtermediums 1 sind in Strömungsrichtung 6 übereinander angeordnet. Auf der Anströmseite 7 und/oder Abströmseite 8 der zwei Materiallagen 2 und 3 des Filtermediums 1 können weitere Materiallagen vorgesehen sein.

Eine weitere Materiallage auf der An- und/oder Abströmseite 7, 8 kann beispielsweise eine grobmaschige Netzstruktur sein, welche die Materiallagen 2 und 3 zusätzlich zusammenhält. Auch andere Materiallagen sind denkbar.

Eine erste Materiallage 2 ist ein Nanofaservlies. Der Begriff "Nanofasern" umfasst Fasern mit einem mittleren Faserdurchmesser in einem Bereich zwischen einem Nanometer und 1000 Nanometern.

In einer bevorzugten Ausführungsvariante sind die Fasern, welche die erste Materiallage 2 bilden zu mehr 90% Nanofasern. Besonders bevorzugt sind mehr als 95%, insbesondere 99%, der Fasern, welche die Materiallage enthält, Nanofasern.

Die erste Materiallage 2 ist die Materiallage der beiden Materiallagen 2 und 3, welche auf der Anströmseite 7 angeordnet ist. Die erste Materiallage 2 weist Nanofasern mit unterschiedlichen mittleren Faserdurchmessern auf. Während feinere Nanofasern, also Nanofasern mit einem geringeren mittleren Faserdurchmesser, im Bereich der Anströmseite 7 der Materiallage 2 vorzufinden sind, sind gröbere Nanofasern, also Nanofasern mit einem größeren mittleren Faserdurchmesser auf der Seite der Materiallage 2 vorzufinden, welche mit der zweiten Materiallage 3 verbunden ist.

Zumindest in den oberen 10% der Gesamthöhe der ersten Materiallage 2 ist ein erster Bereich 4 mit Fasern angeordnet, welche aus feinen Nanofasern mit einem mittleren Faserdurchmesser von 50 bis 400 nm, vorzugsweise 50 bis 250 nm, weiter vorzugsweise 50 bis 150 nm, bestehen.

Zumindest in den unteren 10% der Gesamthöhe der ersten Materiallage 2 ist ein zweiter Bereich 5 mit Fasern angeordnet, welche aus groben Nanofasern mit einem mittleren Faserdurchmesser von 150 bis 1000 nm, vorzugsweise 150 bis 500 nm, bestehen.

Die Fasern des ersten Bereichs 4 weisen einen kleineren mittleren Faserdurchmesser als die Fasern des zweiten Bereichs 5 auf. Der mittlere Faserdurchmesser kann dabei anhand eines Bildabschnitts von oben bestimmt werden. Dabei können die Faserdurchmesser aller im Bildabschnitt befindlichen Fasern ermittelt und ein Mittelwert dieser Faserdurchmesser bestimmt werden. Besonders bevorzugt wird der mittlere Faserdurchmesser durch das Verfahren gemäß der DE 10 2009 043 273 A1 ermittelt auf welche Patentanmeldung im Rahmen der vorliegenden Erfindung vollständig Bezug genommen wird.

Die Nanofasern der Bereiche 4 und 5 können durch ein Meltblown- oder Elektro-Spinnverfahren hergestellt werden. Für Produzenten von Anlagen zur Herstellung feinster Fasern mittels Meltblown- bzw. Elektrospinnverfahren ist die Gleichmäßigkeit der hergestellten Fasern ein wesentliches Qualitätskriterium. Es soll dem Kunden ermöglicht werden Fasern mit einem möglichst exakt definierten Durchmesser mit geringer Streuung reproduzierbar herzustellen. So ist es beispielsweise möglich Nanofasern mit den vorgenannten mittleren Faserdurchmessern definiert herzustellen und lagenweise übereinander anzuordnen. Somit kann die erste Materiallage 2 ebenfalls mehrlagig mit zwei oder mehr Teillagen ausgebildet sein, welche beispielsweise lose, also ohne stoffschlüssige Verbindung, übereinander angeordnet sind.

Alternativ können die Nanofasern der Bereiche 4 und/oder 5 vorteilhaft mittels eines Nasslegeverfahrens realisiert werden.

Bei der Anordnung der Teillagen kann ein Übergangsbereich zwischen den Teillagen auftreten, in welchem sowohl grobe als auch feine Nanofasern angeordnet sind. Die Materiallagen gehen somit ineinander zwischen den Bereichen 4 und 5 über.

Der Aufbau der ersten Materiallage 2 weist somit einen Gradientenaufbau bezüglich des Faserdurchmessers auf, bei welchem der mittlere Faserdurchmesser der Nanofasern in Strömungsrichtung 6 zunimmt. Ein Gradient des Faserdurchmessers im Sinne der vorliegenden Erfindung kann sowohl ein gleichmäßiger Anstieg vorzugsweise jedoch auch ein ungleichmäßiger, insbesondere stufenweiser, Anstieg des Faserdurchmessers in Strömungsrichtung 6 bedeuten. Diese Zunahme des mittleren Faserdurchmessers erhöht sich, bezogen auf die Gesamtzahl der Nanofasern in dem ersten und dem zweiten Bereich 4 und 5, vom ersten zum zweiten Bereich um den Faktor 1,5-5,0; vorzugsweise um den Faktor 1,5-3,0.

Das mittlere Flächengewicht der ersten Materiallage 2 beträgt dabei vorzugsweise weniger als 1g/m².

Die Nanofasern der ersten Materiallage 2 können in den Bereichen 4 und 5 aus unterschiedlichen Materialien hergestellt sein. In einer besonders bevorzugten Ausführungsvariante der Erfindung sind die Nanofasern der ersten Materiallage jedoch alle aus dem gleichen Material hergestellt. Besonders bevorzugt kann es sich bei den Nanofasern um Polyamidfasern handeln.

Bevorzugt können die Nanofasern der ersten Materiallage 2 alle in einem ElektrospinnVerfahren hergestellt werden, so dass die gesamte Nanofaserlage durch diesen Herstellungsprozess realisiert werden kann.

Beim Ablegen haften die Nanofasern des ersten Bereichs durch Formenschluss und/oder Oberflächenwechselwirkungen auf den Nanofasern des zweiten Bereichs.

Die Verbindung der ersten und der zweiten Materialage 2 und 3 kann beliebig gewählt werden. So kann die erste Materiallage 2 in einer bevorzugten Ausführungsvariante lediglich auf der zweiten Materiallage 3 abgelegt sein.

In einer alternativen bevorzugten Ausführungsvariante ist zwischen den beiden Materiallagen 2 und 3 ein Haftvermittler 9 angeordnet. Bei dieser Variante kann auch eine zusätzliche Anhaftung der Nanofasern des ersten Bereichs 4 zusätzlich zu den Nanofasern des zweiten Bereichs 5 durch den Haftvermittler 9, der sich auf der zweiten Mediumslage 3 befindet, erreicht werden. Dadurch entsteht eine vorteilhafte zusätzliche Verstärkung der Haftung. Als Haftvermittler 9 kommt eine Vielzahl von Substanzen in Frage. Bevorzugte Haftvermittler können acryl- und/oder polyurethanbasiert sein und insbesondere in Dispersionsform aufgebracht werden. Diese Haftvermittler sind besonders bevorzugt, da sie bei vergleichsweise geringen Temperaturen trocknen.

Die Nanofasern des ersten und des zweiten Bereichs 4 und 5 sind dabei vorzugsweise spinnennetzartig aufeinander abgelegt und können optional mittels des eines Haftvermittlers an die zweite Materiallage 3 verbunden sein.

Die zweite Materiallage 3 ist eine Stützlage aus einem Faservlies. Diese kann z.B. als ein Meltblown-Faservlies oder ein Spunbond-Faservlies ausgebildet sein.

Das mittlere Flächengewicht der zweiten Materiallage 3 kann vorzugsweise mehr als 60 g/m² betragen. Die Bestimmung des mittleren Flächengewichts erfolgt gemäß DIN/EN ISO 536 für Papierlagen und gemäß DIN/EN 29073-1 für Vliese.

Das mittlere Flächengewicht der Stützlage ist somit zumindest um das 60-fache größer als das mittlere Flächengewicht des Nanofaservlieses.

Der mittlere Faserdurchmesser der Fasern der zweiten Materiallage beträgt mehr als 3µm.

Die Fasern der zweiten Materiallage 3 können vorzugsweise Polyester- und/oder Polypropylenfasern sein. Auch zellulosebasierte Fasern können für die zweite Materiallage vorzugsweise genutzt werden.

Das erfindungsgemäße Filtermedium kann sowohl für die Filterung von Gasen als auch von Flüssigkeiten eingesetzt werden. Allerdings bringt die Verwendung des Filtermediums bei der Verwendung als Partikelfilter bei Filtration von Flüssigkeiten besondere Vorteile mit sich. In der Flüssigfiltration werden aufgrund der im Vergleich zur Gasfiltration höheren Strömungskräfte besondere Anforderungen an die Stabilität der Filtermedien gestellt. Daher wird hier eine erhöhte mechanische Stabilität besonders benötigt. Dünne Feinfaserauflagen, wie z.B. Nanofasernetze, können für sich genommen diesen Strömungskräften nur Stand halten, wenn sie in einer ausreichend dicken Schicht vorliegen. Da der Druckverlust bei der Durchströmung einer Faserschüttung mit der spezifischen Oberfläche und der Schichtdicke der Fasern ansteigt, würden dicke und somit stabile Feinstfaserauflagen einen unwirtschaftlich hohen Druckverlust aufweisen. Daher werden Nanofasern in jedem Fall durch eine Trägerstruktur mit vergleichsweise groben Fasern stabilisiert.

Die erste Medienlage 2 kann auf der zweiten Medienlage 3 lediglich aufgelegt werden. Die beiden Medien können allerdings auch miteinander verklebt oder miteinander punktuell oder randseitig verschweißt sein z.B. durch Ultraschallschweißen.

Abgesehen von dem Gradientenaufbau bezüglich des Faserdurchmessers kann der Aufbau der Nanofaserlage auf die Erfordernisse der Filtrationsanwendung und des Trägermaterials abgestimmt werden. Wird die Nanofaserlage beispielsweise von einem relativ offenporigen Spinnvlies als zweite Materiallage 3 gestützt, so kann die Faserschicht im unteren Bereich 5 der Nanofaserlage stärker gewählt werden als bei einem Meltblown-Vlies als Träger.

Dicke Fasern sind erfahrungsgemäß mechanisch und chemisch widerstandsfähiger als dünne Fasern. Eine wesentliche Schwierigkeit bei der Herstellung von Nanofasermedien besteht in der Sicherstellung einer ausreichenden Stabilität dieser Feinfaser.

Durch die Anordnung von dickeren Nanofasern im unteren Bereich 5 der Nanofaserlage kann eine erhöhte Widerstandsfähigkeit dieser Medienlage 2 durch eine erhöhte Anzahl an Stützstellen realisiert werden.

Durch den Gradientenaufbau in der Nanofaserlage kann die zweite Medienlage 3 verhältnismäßg grobporig und somit kostengünstig gewählt werden. Die Beschichtung der Träger bzw. Stützlage mit einer Nanofaser-Stützschicht und der Feinstfaserauflage kann mittels Elektrospinnen in einem Durchlauf erfolgen.

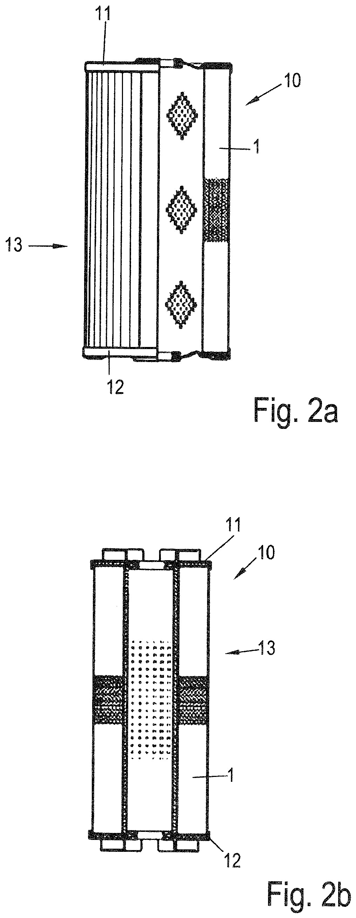

Figur 2a und 2b zeigen verschiedene Varianten eines Filterelements 10 mit einem plissierten Filtermedium 1 gemäß dem Ausführungsbeispiel der Fig. 1. Das Filtermedium 1 ist dabei sternförmig plissiert zu einem Rundkörper gefaltet, der an beiden Enden mit einer ersten 11 und einer zweiten Endscheibe 12 abgeschlossen ist. Diese beiden Endscheiben 11, 12 dienen zur Aufnahme und Fixierung sowie zur Abdichtung des Filterelements 10 in einem Gehäuse eines Filtersystems. An dem Außenumfang des Rundkörpers des Filtermediums 1 sind Faltenkanten zu erkennen, die parallel zu einer Längsrichtung der Stützschicht des Filtermediums 1 liegen, während eine Querrichtung der Stützschicht senkrecht dazu liegt. Die Durchströmungsrichtung 13 des Filterelements 10 mit einem Fluid ist radial von außen in den Rundkörper des Filtermediums 1 nach innen, wo das gefilterte Fluid dann axial durch einen Auslass aus dem Filterelement 10 wieder abfließen kann. In einem solchen Ausführungsbeispiel kann das Filterelement 10 beispielsweise als Erodierfilter in einer Erodiermaschine eingesetzt werden und zur Entfernung von Partikeln aus einer Flüssigkeit, insbesondere von Wasser oder einer wässrigen Lösung, genutzt werden.

Die eingesetzte Masse des eingesetzten Polymermaterials pro Flächenabschnitt zur Ausbildung der Nanofasern des ersten Bereichs 4 der ersten Materiallage 2 kann vorzugsweise von 20% bis zu 5000% der Masse des eingesetzten Polymermaterials zur Ausbildung der Nanofasern des zweiten Bereichs 5 der ersten Materiallage 2 betragen.

## Patentansprüche

1. Filtermedium (1), umfassend eine erste Medienlage (2) und eine zweite Medienlage (3), welche zweite Medienlage (3) in einer bestimmungsgemäßen Strömungsrichtung (6) des Filtermediums (1) hinter der ersten Medienlage (2) angeordnet ist, wobei die erste Medienlage (2) als eine Nanofaserlage mit Nanofasern ausgebildet ist und wobei die zweite Medienlage (3) als eine Stützschicht mit einem mittleren Flächengewicht von mehr als 60 g/m² ausgebildet ist,
wobei die erste Medienlage anströmseitig einen ersten Bereich (4) aufweist und abströmseitig zur zweiten Mediumslage hin einen zweiten Bereich (5) aufweist, **dadurch gekennzeichnet, dass** die Nanofasern des ersten Bereichs (4) einen kleineren mittleren Faserdurchmesser aufweisen als die Nanofasern des zweiten Bereichs (5).

2. Filtermedium nach Anspruch 1, **dadurch gekennzeichnet, dass** mehr als 75% der Nanofasern des ersten Bereichs (4) einen kleineren Faserdurchmesser aufweisen als die Nanofasern des zweiten Bereichs (5).

3. Filtermedium nach Anspruch 1 oder 2, **dadurch gekennzeichnet, dass** die Nanofasern des ersten Bereichs (4) und/oder die Nanofasern des zweiten Bereichs (5) aufeinander abgelegt sind, insbesondere mittels eines Elektrospinnverfahrens.

4. Filtermedium nach einem der vorhergehenden Ansprüche, **dadurch gekennzeichnet, dass** der erste Bereich (4) aus Nanofasern mit einem mittleren Faserdurchmesser von 50 bis 400 nm, vorzugsweise 50 bis 250 nm, weiter vorzugsweise 50 bis 150 nm, besteht.

5. Filtermedium nach einem der vorhergehenden Ansprüche, **dadurch gekennzeichnet, dass** der zweite Bereich (5) aus Nanofasern mit einem mittleren Faserdurchmesser von 150 bis 1000 nm, vorzugsweise 150 bis 500 nm, besonders bevorzugt 150 bis 299 nm, besteht.

6. Filtermedium nach einem der vorhergehenden Ansprüche, **dadurch gekennzeichnet, dass** der mittlere Faserdurchmesser der Nanofasern, bezogen auf die Gesamtzahl an Fasern im ersten und im zweiten Bereich (4, 5), vom ersten zum zweiten Bereich um den Faktor 1,5-5,0; vorzugsweise um den Faktor 1,5-3,0; zunimmt.

7. Filtermedium nach einem der vorhergehenden Ansprüche, **dadurch gekennzeichnet, dass** die Nanofasern der ersten Medienlage (2) zu mehr als 75% Polyamid-Nanofasern sind.

8. Filtermedium nach einem der vorhergehenden Ansprüche, **dadurch gekennzeichnet, dass** die erste Medienlage (2) ein Flächengewicht von kleiner 20 g/m², bevorzugt kleiner 10 g/m², besonders bevorzugt kleiner 1 g/m² aufweist.

9. Filtermedium nach einem der vorhergehenden Ansprüche, **dadurch gekennzeichnet, dass** die zweite Medienlage (3) als Meltblownlage oder als Spunbondlage ausgebildet ist.

10. Filtermedium nach einem der vorhergehenden Ansprüche, **dadurch gekennzeichnet, dass** zumindest 50%, insbesondere zumindest 75% der Fasern der zweiten Medienlage (3) aus einem Polyester und/oder aus einem Polypropylen bestehen.

11. Filtermedium nach einem der vorhergehenden Ansprüche, **dadurch gekennzeichnet, dass** der mittlere Faserdurchmesser der Fasern der zweiten Medienlage (3) mehr 3 µm beträgt.

12. Filterelement (10) mit einem Filtermedium (1) gemäß einem der vorhergehenden Ansprüche, **dadurch gekennzeichnet, dass** das Filtermedium (1) des Filterelements gefaltet und insbesondere zu einem Rundkörper ausgebildet ist, wobei das Filterelement (10) zwei Endscheiben (11, 12) aufweist, zwischen welchen der aus dem Filtermedium (1) gebildete Rundkörper angeordnet, insbesondere eingefasst, ist.

13. Verwendung des Filterelements gemäß Anspruch 12 oder des Filtermediums gemäß einem der Ansprüche 1 bis 11 zur Filtration von Flüssigkeiten, beispielsweise für Wasser, Öl, Kraftstoff oder für das Dielektrikum einer Funkenerodiermaschine.

14. Verfahren zur Herstellung eines Filtermediums, insbesondere eines Flüssigkeitsfiltermediums, insbesondere nach einem der Ansprüche 1 bis 11, wobei eine Stützschicht bereitgestellt wird und eine Nanofaserlage mit mindestens einem ersten Bereich und einem zweiten Bereich auf die Stützschicht aufgebracht wird, wobei der zweite Bereich zur Stützsicht hin orientiert ist und die Nanofasern des ersten Bereichs einen kleineren mittleren Faserdurchmesser als die Nanofasern des zweiten Bereichs aufweisen.

15. Verfahren nach Anspruch 14, wobei der erste und/oder der zweite Bereich der Nanofasern im Elektrospinning-Verfahren hergestellt wird.

## Claims

1. Filter medium (1), comprising a first media layer (2) and a second media layer (3), said second media layer (3) being disposed in an intended flow direction (6) of the filter medium (1) behind the first media layer (2), wherein the first media layer (2) is designed as nanofiber layer with nanofibers and wherein the second media layer (3) is designed as support layer having an average weight per unit area of more than 60 gsm, wherein the first media layer features a first section (4) on the inflow side and a second section (5) on the outflow side towards the second media layer, **characterized in that** the nanofibers of the first section (4) have a smaller average fiber diameter than the nanofibers of the second section (5).

2. Filter medium according to claim 1, **characterized in that** more than 75% of the nanofibers of the first section (4) have a smaller fiber diameter than the nanofibers of the second section (5).

3. Filter medium according to claim 1 or 2, **characterized in that** the nanofibers of the first section (4) and/or the nanofibers of the second section (5) are placed one above the other, in particular by means of an electrospinning process.

4. Filter medium according to one of the above claims, **characterized in that** the first section (4) is made of nanofibers with an average fiber diameter of 50 to 400 nm, preferably 50 to 250 nm, further preferably 50 to 150 nm.

5. Filter medium according to one of the above claims, **characterized in that** the second section (5) is made of nanofibers with an average fiber diameter of 150 to 1000 nm, preferably 150 to 500 nm, particularly preferably 150 to 299 nm.

6. Filter medium according to one of the above claims, **characterized in that** the average fiber diameter of the nanofibers, with regard to the total number of fibers in the first and the second section (4, 5), increases from the first section to the second section by a factor of 1.5-5.0; preferably by a factor of 1.5-3.0.

7. Filter medium according to one of the above claims, **characterized in that** the nanofibers of the first media layer (2) are made to more than 75% of polyamide nanofibers.

8. Filter medium according to one of the above claims, **characterized in that** the first media layer (2) has a weight per unit area of less than 20 gsm, preferably less than 10 gsm, particularly preferably less than 1 gsm.

9. Filter medium according to one of the above claims, **characterized in that** the second media layer (3) is realized as meltblown layer or as spunbond layer.

10. Filter medium according to one of the above claims, **characterized in that** at least 50%, in particular at least 75% of the fibers of the second media layer (3) are made of a polyester and/or of a polypropylene.

11. Filter medium according to one of the above claims, **characterized in that** the average fiber diameter of the fibers of the second media layer (3) is more than 3 µm.

12. Filter element (10) having a filter medium (1) according to one of the above claims, **characterized in that** the filter medium (1) of the filter element is folded and in particular designed as round body, wherein the filter element (10) features two end disks (11, 12) between which the round body formed by the filter medium (1) is disposed, in particular enclosed.

13. Use of the filter element according to claim 12 or of the filter medium according to one of the claims 1 to 11 for filtering liquids, for example for water, oil, fuel or for the dielectric of a spark-erosion machine.

14. Process for producing a filter medium, in particular a liquid filter medium, in particular according to one of the claims 1 to 11, wherein a support layer is provided and a nanofiber layer with at least one first section and one second section is applied to the support layer, wherein the second section is oriented towards the support layer and the nanofibers of the first section have a smaller average fiber diameter than the nanofibers of the second section.

15. Process according to claim 14, wherein the first and/or second section of the nanofibers is produced in the electro-spinning process.

## Revendications

1. Média filtrant (1), comprenant une première couche de média (2) et une deuxième couche de média (3), ladite deuxième couche de média (3) étant disposée dans un sens du flux (6) conforme du média filtrant (1) derrière la première couche de média (2), la première couche de média (2) étant exécutée en tant que couche de nanofibres avec nanofibres et la deuxième couche de média (3) étant exécutée en tant que couche de support avec un grammage moyen de plus de 60 g/m2, la première couche de média présentant côté entrée une première zone (4) et présentant côté d'écoulement vers la deuxième couche média une deuxième zone (5), **caractérisé en ce que** les nanofibres de la première zone (4) présentent un diamètre de fibres moyen plus petit que les nanofibres de la deuxième zone (5).

2. Média filtrant selon la revendication 1, **caractérisé en ce que** plus de 75% des nanofibres de la première zone (4) présentent un diamètre de fibres plus petit que les nanofibres de la deuxième zone (5).

3. Média filtrant selon la revendication 1 ou 2, **caractérisé en ce que** les nanofibres de la première zone (4) et/ou les nanofibres de la deuxième zone (5) sont placées les unes sur les autres au moyen d'un procédé de filage électrique.

4. Média filtrant selon l'une des revendications précédentes, **caractérisé en ce que** la première zone (4) est constituée de nanofibres ayant un diamètre de fibres moyen de 50 à 400 nm, de préférence de 50 à 250 nm, plus préférablement de 50 à 150 nm.

5. Média filtrant selon l'une des revendications précédentes, **caractérisé en ce que** la deuxième zone (5) est constituée de nanofibres ayant un diamètre de fibres moyen de 150 à 1000 nm, de préférence de 150 à 500 nm, de façon particulièrement préférée de 150 à 299 nm.

6. Média filtrant suivant l'une quelconque des revendications précédentes, **caractérisé en ce que** le diamètre de fibres des nanofibres augmente, par rapport au nombre total des fibres dans la première et la deuxième zone (4, 5), de la première zone à la deuxième zone du facteur 1,5-5,0; de préférence du facteur 1,5-3,0.

7. Média filtrant selon l'une des revendications précédentes, **caractérisé en ce que** les nanofibres de la première couche de média (2) sont composées à plus de 75% de nanofibres de polyamide.

8. Média filtrant selon l'une des revendications précédentes, **caractérisé en ce que** la première couche de média (2) présente un grammage plus petit que 20 g/m2, de préférence plus petit que 10 g/m2, de façon particulièrement préférée plus petit que 1 g/m2.

9. Média filtrant selon l'une des revendications précédentes, **caractérisé en ce que** la deuxième couche de média (3) est réalisée en tant que couche de fibres fondues-soufflées ou en tant que couche de fibres filées-liées.

10. Média filtrant selon l'une des revendications précédentes, **caractérisé en ce qu'**au moins 50%, notamment au moins 75% des fibres de la deuxième couche de média (3) sont constituées d'un polyester et/ou d'un polypropylène.

11. Média filtrant selon l'une des revendications précédentes, **caractérisé en ce que** le diamètre de fibres des fibres de la deuxième couche de média (3) est supérieur à 3 µm.

12. Élément filtrant (10) avec un média filtrant (1) selon l'une des revendications précédentes, **caractérisé en ce que** le média filtrant (1) de l'élément filtrant est plié et notamment réalisé en tant que corps rond, l'élément filtrant (10) présentant deux disques d'extrémité (11, 12) entre lesquels le corps rond formé du milieu filtrant (1) est disposé, notamment encerclé.

13. Utilisation de l'élément filtrant selon la revendication 12 ou du média filtrant selon l'une des revendications 1 à 11 pour filtrer des liquides, par exemple pour l'eau, l'huile, le carburant ou pour le diélectrique d'une machine d'électroérosion.

14. Procédé de fabrication d'un média filtrant, notamment d'un média pour filtrer du liquide, notamment selon l'une des revendications 1 à 11, une couche de support étant mise à disposition et une couche de nanofibres avec au moins une première zone et une deuxième zone étant appliquée sur la couche de support, la deuxième zone étant orientée vers la couche de support et les nanofibres de la première zone présentant un diamètre de fibres moyen plus petit que les nanofibres de la deuxième zone.

15. Procédé selon la revendication 14, la première et/ou la deuxième zone des nanofibres étant fabriquées selon le procédé d'électrofilage.
